# FASCICULE DE BREVET EUROPEEN

(11) **EP 2 862 804 B1**
(45) Date de publication et mention de la délivrance du brevet: **30.03.2016**
(21) Numéro de dépôt: 14003408.3
(22) Date de dépôt: 02.10.2014
(51) Int. Cl.: B64D 15/12

(54) **Dispositif anti-regel pour pales d'aéronef**
Frostschutzvorrichtung für Luftfahrzeugflügel
Anti-icing device for aircraft blades

(30) Priorité: 17.10.2013 FR 1302405
(43) Date de publication de la demande: 22.04.2015
(73) Titulaire: Airbus Helicopters, 13725 Marignane Cedex (FR)
(72) Inventeur: Arnaud, Gilles, F-13009 Marseille (FR)
(74) Mandataire: GPI & Associés

(56) Documents cités:
- DE-C- 709 354
- GB-A- 1 248 964
- US-A- 5 322 246

## Description

La présente invention se rapporte au domaine technique général du dégivrage d'un élément aérodynamique d'un aéronef et plus particulièrement des pales d'un aéronef à voilure tournante.

La présente invention concerne un dispositif anti-regel pour une pale d'aéronef agissant en complément d'un système de dégivrage.

Il est bien connu que la formation et l'accumulation de givre ou de glace sur une face externe d'un aéronef et plus particulièrement le bord d'attaque d'un élément aérodynamique tel qu'une aile ou bien une pale d'un rotor peut avoir des effets néfastes sur le fonctionnement de cet aéronef. En effet, la présence de givre ou de glace peut modifier très rapidement et de façon importante les caractéristiques aérodynamiques de cette face externe. Notamment lorsque cette face externe est une pale d'un rotor principal d'un aéronef à voilure tournante, cette présence de givre ou de glace peut être à l'origine d'une perte de performances, voire d'un accident de cet aéronef.

Une solution connue de dégivrage pour limiter voire supprimer cette présence de givre ou de glace est de chauffer la zone du bord d'attaque d'un élément aérodynamique. Cette chaleur permet d'élever la température du bord d'attaque au-delà des températures propices à la formation de givre. On parle alors de systèmes de dégivrage électrothermiques, la chaleur étant généralement fournie à partir d'un courant électrique. De tels systèmes de dégivrage permettent donc la suppression du givre et/ou de la glace d'un élément aérodynamique. Dans la suite de la description, on se limite à évoquer la suppression du givre, le terme « givre » pouvant être substitué par le terme « glace ».

Il existe différentes technologies de systèmes de dégivrage électrothermiques permettant de chauffer la zone du bord d'attaque d'un élément aérodynamique. On connaît par exemple les systèmes de dégivrage électrothermiques comportant des résistances électriques noyées dans le bord d'attaque d'un élément aérodynamique et chauffant ce bord d'attaque.

De même, il existe des systèmes de dégivrage dans lesquels la chaleur est générée par le phénomène d'induction magnétique chauffant alors une ou plusieurs pièces métalliques positionnées au niveau du bord d'attaque de l'élément aérodynamique.

Par contre, de tels systèmes sont très consommateurs d'énergie électrique, notamment dans le cas d'éléments aérodynamiques de grande envergure tels qu'une aile d'avion ou une pale d'un rotor principal de sustentation d'un aéronef à voilure tournante. Il est alors difficile voire impossible d'alimenter en permanence de tels systèmes de dégivrage électrothermiques pour de tels éléments aérodynamiques, l'énergie électrique à fournir étant trop importante.

Cependant, pour les éléments aérodynamiques de faible envergure, il est possible d'alimenter de tels systèmes de dégivrage électrothermiques en permanence. Dans ce cas, le bord d'attaque de ces éléments aérodynamiques est chauffé en permanence. Il n'y a alors pas de formation de givre, mais l'apparition éventuelle de gouttes d'eau sur le bord d'attaque, voire d'un film d'eau. On parle alors plus exactement de « systèmes d'antigivrage ». De tels systèmes d'antigivrage sont par exemple utilisés sur les pales du rotor arrière anti-couple des aéronefs à voilures tournantes.

Afin de limiter le besoin en énergie électrique de ces systèmes de dégivrage électrothermiques et, par suite, de pouvoir les utiliser, il est d'usage de les diviser en plusieurs bandes longitudinales qui sont positionnées selon l'envergure de l'élément aérodynamique et/ou en plusieurs bandes transversales qui sont positionnées selon sa corde. Ces différentes bandes sont alors alimentées électriquement alternativement de façon cyclique, chauffant ainsi successivement différentes zones du bord d'attaque de l'élément aérodynamique.

Ces systèmes de dégivrage électrothermiques permettent un dépôt de givre partiel et transitoire sur certaines zones du bord d'attaque de l'élément aérodynamique entre chaque cycle de chauffe. Ce dépôt partiel de givre peut alors altérer de façon transitoire l'efficacité de l'élément aérodynamique, mais permet surtout de limiter le besoin en énergie électrique.

De tels systèmes de dégivrage électrothermiques sont généralement utilisés pour la protection contre le givre des rotors principaux de sustentation d'aéronefs à voilures tournantes.

En effet, en cas de présence de givre sur le bord d'attaque d'une pale, la chaleur générée par chaque bande d'un système de dégivrage électrothermique provoque l'apparition localement d'un mince film d'eau entre le bord d'attaque et le givre. Ensuite, le givre restant est alors éjecté grâce principalement à l'action de la force centrifuge générée par la rotation de la pale.

En outre, on connaît le document FR 1554838 qui décrit un dispositif de commutation électrique afin d'alimenter de façon cyclique et prédéterminée les différentes bandes positionnées sur le bord d'attaque des pales d'un rotor principal d'un aéronef à voilure tournante constituant le système de dégivrage électrothermique de ce rotor principal.

De plus, le document FR2354242 décrit un système de dégivrage destiné aux pales d'un rotor principal d'un aéronef à voilure tournante dont le bord d'attaque est amovible. Il est ainsi aisé de changer ce bord d'attaque et, par suite, le système de dégivrage en cas de dysfonctionnement ou bien de maintenance du système de dégivrage. De même, le bord d'attaque peut être équipé ou non d'un système de dégivrage suivant les conditions de vol rencontrées par l'aéronef.

On connait également le document US 5322246 qui décrit une surface portante, telle une aile d'avion, comportant une marche positionnée sur la totalité de la longueur de la surface portante. Cette marche est positionnée en aval de systèmes antigivrage ou bien de systèmes de dégivrage. Cette marche génère l'apparition de turbulences sur la couche limite de l'air circulant sur la surface portance. Cette marche permet également de transformer l'eau ruisselant sur la surface portante, en aval des systèmes antigivrage ou de dégivrage, en gouttelettes qui sont ensuite évacuées par la couche limite de l'air, évitant ainsi l'apparition de givre ou bien de glace.

Le document DE 709354 décrit quand à lui un moyen utilisant de l'air chaud circulant entre le corps d'une surface portante et son bord d'attaque afin d'empêcher la formation de glace. Des conduites présentes dans le corps de cette surface portante permettent d'alimenter toute la longueur de cette surface portante en air chaud, des fentes présentes sur la surface portante en aval du bord d'attaque permettant d'évacuer cet air chaud.

Une autre technologie vise à casser le givre formé au niveau de la pale. Par exemple, un système pneumatique permet le gonflage d'enveloppes en caoutchouc situées au niveau du bord d'attaque d'un élément aérodynamique. Ce type de systèmes de givrage est plutôt destiné aux éléments aérodynamiques fixes tels qu'une aile d'avion ou bien un empennage d'avion ou d'aéronef à voilure tournante. Cependant, un tel système peut également équiper des pales d'un aéronef à voilure tournante tel que décrit dans le document FR2545785.

Par ailleurs, d'autres méthodes moins répandues existent également, telles que l'utilisation d'ultrasons ou bien d'un fluide antigel.

L'objet de l'invention est destiné à agir en complément des systèmes de dégivrage électrothermiques afin de supprimer le phénomène de regel qui dégrade l'efficacité de ces systèmes de dégivrage.

En effet, si les systèmes de dégivrage électrothermiques sont efficaces pour la suppression du givre pouvant se former au niveau du bord d'attaque d'un élément aérodynamique, il est fréquent qu'un phénomène de regel se produise en aval de ce système de dégivrage, c'est-à-dire juste après la dernière bande constituant ce système de dégivrage.

On utilise les termes « aval » et « amont » selon la direction du bord d'attaque vers le bord de fuite de l'élément aérodynamique. Ainsi, un phénomène se produisant en avant du bord d'attaque se situe en amont de ce bord d'attaque. Inversement, un phénomène se produisant en arrière du bord d'attaque se situe en aval de ce bord d'attaque.

Le phénomène de regel est en fait une conséquence de l'efficacité des systèmes de dégivrage électrothermiques. Les gouttes d'eau ou le film d'eau apparaissant au niveau du bord d'attaque peuvent ruisseler sur l'élément aérodynamique de l'amont vers l'aval. Ce ruissellement se passe sans rencontrer d'obstacle sur les bandes qui ont été chauffées et où le givre éventuel a été éjecté.

Par contre, lorsque ce ruissellement d'eau rencontre du givre sur une bande non encore chauffée, cette eau se met à geler très rapidement augmentant la couche de givre. En effet, les gouttes d'eau constituant ce ruissellement ont une température légèrement positive, étant formées par la fonte du givre sous l'effet du système de dégivrage. Ensuite, ces gouttes d'eau sont refroidies au contact d'une bande non encore chauffée jusqu'à se transformer en givre ou en glace. La dégradation alors générée par ce givre sur les performances de l'élément aérodynamique n'est cependant que transitoire, le givre disparaissant dès que cette bande est à nouveau alimentée électriquement.

De même, l'eau de ce ruissellement peut geler très rapidement au contact d'une surface froide, c'est-à-dire en aval du système de dégivrage électrothermique. Une barrière de regel constituée de givre et/ou de glace peut alors se former en aval du système de dégivrage électrothermique. Cette barrière de regel se forme juste à la fin du système de dégivrage électrothermique de l'élément aérodynamique et peut altérer significativement les performances aérodynamiques de l'élément aérodynamique malgré la présence d'un système de dégivrage électrothermique efficace.

La quantité d'eau ruisselant sur l'élément aérodynamique peut varier selon les conditions atmosphériques rencontrées par l'aéronef ainsi que selon l'efficacité thermique du système de dégivrage, et essentiellement en fonction de la température et du taux d'humidité de l'environnement de l'aéronef. Cette quantité d'eau peut être importante si les conditions atmosphériques sont humides ou bien que l'aéronef traverse par exemple un nuage, un mince film d'eau pouvant recouvrir le bord d'attaque de cet élément aérodynamique. Inversement, cette quantité d'eau peut être limitée à quelques gouttes d'eau si les conditions sont plus sèches. Evidemment, cette quantité d'eau peut être nulle si les conditions atmosphériques sont favorables.

La peau d'extrados de l'élément aérodynamique est le siège d'une zone de forte dépression au niveau du bord d'attaque qui est suivie en aval d'abord par une zone de forte « recompression », puis par une zone de recompression modérée. Cette peau d'extrados est généralement formée par la face supérieure de l'élément aérodynamique. La présence de cette barrière de regel peut être acceptable dans une certaine zone limitée en aval du bord d'attaque, cette barrière de regel ayant un effet modéré sur l'efficacité aérodynamique de l'élément aérodynamique, cet effet étant identique à la présence d'un obstacle sur cette peau d'extrados. La présence de cette barrière de regel dans cette zone limitée génère alors essentiellement une trainée de forme, désignée également par trainée de profil.

Par contre, en-deçà ou au-delà de cette zone limitée, il peut se produire une dégradation du profil de pression de cette peau d'extrados et, par suite, une perte de portance aérodynamique de l'élément aérodynamique ou bien un décollement de la couche limite de l'écoulement d'air par rapport à l'élément aérodynamique et, par suite, une augmentation importante de sa traînée aérodynamique.

En effet, une première zone située, selon le profil aérodynamique, entre 3% et 15% de la corde en aval du bord d'attaque sur la peau d'extrados génère la majorité de la portance de l'élément aérodynamique. De fait, cette première zone est préférentiellement protégée par un système de dégivrage qui peut être prolongé généralement au-delà de cette première zone afin d'éviter la formation de givre.

En outre, dans une seconde zone située au-delà de 30% de la corde en aval du bord d'attaque sur cette peau d'extrados, il faut éviter toute perturbation supplémentaire de la couche limite de l'air qui pourrait générer un décollement de cette couche limite, qui est déjà très sollicitée en amont de cette seconde zone.

Entre cette première et cette seconde zones se trouve la zone de recompression précédemment évoquée, dans laquelle la couche limite est turbulente et résiste mieux à une perturbation, une telle perturbation ayant un effet modéré sur l'efficacité aérodynamique de l'élément aérodynamique.

Sur la peau d'intrados de l'élément aérodynamique, qui est le siège d'une zone de surpression et est généralement formée par la face inférieure de l'élément aérodynamique, la barrière de regel peut faire partiellement obstacle à la couche limite de l'écoulement d'air qui est essentiellement laminaire dans cette zone de surpression. La présence de cette barrière de regel sur la peau d'intrados a alors pour conséquence de faire au moins partiellement barrage à cette couche limite laminaire de l'air sur la peau d'intrados, provoquant alors des dépressions locales et en déstabilisant cette couche limite laminaire et, par suite, d'augmenter les forces aérodynamiques de traînée générées par cette peau d'intrados.

Il est donc important de limiter la présence de cette barrière de regel afin de ne pas dégrader de façon importante l'efficacité aérodynamique de l'élément aérodynamique, notamment sur la peau d'intrados de cet élément aérodynamique.

La présente invention a alors pour objet de proposer un dispositif permettant de limiter, voire de supprimer la formation de la barrière de regel sur un élément aérodynamique et, plus particulièrement sur chaque pale d'un rotor d'un aéronef à voilure tournante.

Selon l'invention, l'élément aérodynamique muni d'un dispositif anti-regel comporte une peau d'intrados et une peau d'extrados s'étendant longitudinalement selon l'envergure de l'élément aérodynamique d'une première extrémité à une seconde extrémité de cet élément aérodynamique. Cet élément aérodynamique comporte également un bord d'attaque et un bord de fuite. Le bord d'attaque s'étend longitudinalement selon l'envergure de l'élément aérodynamique et relie, dans une zone amont de l'élément aérodynamique selon une corde de l'élément aérodynamique, les peaux d'intrados et d'extrados. Le bord de fuite s'étend longitudinalement selon l'envergure de l'élément aérodynamique et relie, dans une zone aval de l'élément aérodynamique selon une corde de l'élément aérodynamique, les peaux d'intrados et d'extrados. De fait, cet élément aérodynamique s'étend transversalement du bord d'attaque jusqu'au bord de fuite, le long de la corde de l'élément aérodynamique. L'élément aérodynamique est équipé d'un système de dégivrage positionné au niveau de son bord d'attaque.

Ce dispositif anti-regel est remarquable en ce qu'il comporte une rainure d'évacuation apte à s'étendre longitudinalement selon l'envergure de l'élément aérodynamique sur chaque peau d'intrados et d'extrados. Chaque rainure d'évacuation est apte à être positionnée juste en aval du système de dégivrage transversalement selon la corde de l'élément aérodynamique afin de récupérer et d'évacuer l'eau ruisselant sur l'élément aérodynamique de l'amont vers l'aval de l'élément aérodynamique.

Cet élément aérodynamique est un élément sur lequel s'exercent notamment des forces aérodynamiques de portance générées par un écoulement d'air sur ses peaux d'intrados et d'extrados. Cet élément aérodynamique peut être par exemple une aile d'avion ainsi qu'un empennage ou bien une dérive.

De préférence, cet élément aérodynamique est une pale d'un rotor tournant d'un aéronef à voilure tournante. Ce rotor peut être un rotor principal de cet aéronef assurant la sustentation voire la propulsion de l'aéronef ou bien un rotor arrière assurant essentiellement une fonction anti-couple en lacet.

Cet élément aérodynamique est généralement fixé à une structure, telle que le fuselage d'un avion ou bien le moyeu d'un rotor d'un aéronef, par sa première extrémité alors que sa seconde extrémité est libre.

Le système de dégivrage est un système de dégivrage générant de la chaleur au niveau du bord d'attaque de l'élément aérodynamique afin de provoquer une fonte au moins partielle du givre sur les peaux d'intrados et d'extrados au niveau de ce bord d'attaque et, par suite, l'apparition d'eau. De préférence, le système de dégivrage est un système de dégivrage électrothermique.

Le système de dégivrage électrothermique peut être alimenté électriquement en permanence. Dans ce cas, le bord d'attaque est chauffé en permanence, empêchant ainsi la formation de givre. Par contre, de l'eau peut alors se former et ruisseler sur ce bord d'attaque. Le système de dégivrage électrothermique constitue alors plus exactement un système d'antigivrage.

Le système de dégivrage électrothermique peut également être formé de plusieurs éléments alimentés électriquement alternativement de façon cyclique. Dans ce cas, différentes zones du bord d'attaque de l'élément aérodynamique sont chauffées successivement. Du givre peut alors se former localement sur ce bord d'attaque, ce givre étant ensuite éliminé dès que cette zone est chauffée, le givre fondant au moins partiellement. De l'eau se forme alors à partir du givre et peut ruisseler sur le bord d'attaque.

Cette eau ruisselant sur la zone de l'élément aérodynamique peut former une barrière de regel comme évoquée précédemment dès qu'elle atteint une zone non chauffée par le système de dégivrage.

Chaque rainure d'évacuation du dispositif anti-regel selon l'invention est située juste en aval du système de dégivrage selon la corde de l'élément aérodynamique, c'est-à-dire dès que les peaux d'intrados et d'extrados de l'élément aérodynamique ne peuvent plus être chauffées par le système de dégivrage. Ainsi, cette eau peut pénétrer dans chaque rainure d'évacuation pour être évacuée au lieu de continuer de ruisseler sur les peaux d'intrados et d'extrados et, par suite, de former du givre et/ou de la glace.

Avantageusement, le dispositif anti-regel permet ainsi de limiter, voire de supprimer la formation de cette barrière de regel et, par suite, d'éviter qu'une dégradation des performances de l'élément aérodynamique n'apparaisse.

Selon un mode de réalisation préféré de l'invention, ce dispositif anti-regel est destiné à un élément aérodynamique tournant et plus particulièrement à une pale de rotor d'un aéronef à voilure tournante. Cet élément aérodynamique étant tournant, il est le siège d'une force centrifuge orientée de la première extrémité de cet élément aérodynamique vers la seconde extrémité de cet élément aérodynamique. Avantageusement, cette force centrifuge permet d'évacuer l'eau s'accumulant dans chaque rainure d'évacuation vers la seconde extrémité de cet élément aérodynamique. Chaque rainure d'évacuation est alors débouchante au niveau de cette seconde extrémité permettant ainsi d'expulser cette eau hors de la rainure d'évacuation et, par suite, hors de l'élément aérodynamique.

Ce mode de réalisation préféré est particulièrement efficace lorsqu'il équipe une pale d'un rotor d'un aéronef à voilure tournante. En effet, une pale d'un rotor principal d'un tel aéronef a généralement une vitesse de rotation comprise entre 150 et 450 tours par minute (150 à 450 trs/mn) pour une envergure comprise entre 5 et 13 mètres (5 et 13m). De même, une pale d'un rotor arrière d'un tel aéronef a généralement une vitesse de rotation de rotation supérieure à 1000 trs/mn pour une envergure de l'ordre de 0.8 à 3m. L'effet conjugué de ces envergures et de ces vitesses de rotation permettent d'obtenir une accélération centrifuge importante pouvant par exemple correspondre au niveau de la seconde extrémité de la pale à une accélération supérieure à cent fois la gravité terrestre. Une telle accélération centrifuge, qui est disponible et peut être utilisée sans pénaliser aucune autre fonction de l'aéronef, permet d'expulser facilement et efficacement l'eau présente dans la rainure d'évacuation.

De plus, l'accélération centrifuge augmente le long de l'envergure de cet élément aérodynamique de sa première extrémité vers sa seconde extrémité. Avantageusement, la force centrifuge résultant de cette accélération centrifuge augmente ainsi avec la quantité d'eau à évacuer. En effet, l'eau circule, sous l'action de la force centrifuge, vers la seconde extrémité de l'élément aérodynamique. De fait, la quantité d'eau à évacuer augmente également le long de l'envergure de cet élément aérodynamique vers sa seconde extrémité. Ainsi, selon ce mode de réalisation préféré de l'invention, plus la quantité d'eau à évacuer est importante, plus la force centrifuge permettant cette évacuation est importante.

En outre, cet élément aérodynamique étant tournant, la vitesse de l'écoulement d'air générant des forces aérodynamiques de portance et de traînée est différente selon l'envergure de l'élément aérodynamique. Plus précisément, ces forces aérodynamiques de portance et de traînée sont faibles dans une zone interne située à proximité du centre de rotation de la pale, c'est-à-dire vers la première extrémité de l'élément aérodynamique, et maximum vers la seconde extrémité de l'élément aérodynamique. De fait, la présence d'une barrière de regel dans cette zone interne ne dégradera pas ou bien très faiblement les performances aérodynamiques de l'élément aérodynamique. Par suite, il n'est pas nécessaire de supprimer la barrière de regel pouvant se former dans une telle zone interne.

En conséquence, chaque rainure d'évacuation du dispositif anti-regel peut se situer sur la totalité de l'envergure de l'élément aérodynamique, de sa première extrémité jusqu'à sa seconde extrémité. De préférence, chaque rainure d'évacuation du dispositif anti-regel se situe sur l'ensemble de l'envergure de l'élément aérodynamique à l'exception d'une zone interne située vers la première extrémité de l'élément aérodynamique. Par exemple, cette zone interne s'étend du centre de rotation de l'élément aérodynamique jusqu'à une distance représentant 50% de l'envergure totale de l'élément aérodynamique. On entend par « envergure totale » de l'élément aérodynamique la distance entre le centre de rotation de cet élément aérodynamique et la seconde extrémité de cet élément aérodynamique selon la direction de cette envergure.

Selon un autre mode de réalisation de l'invention, le dispositif anti-regel comporte au moins une conduite interne de récupération s'étendant selon l'envergure de l'élément aérodynamique et des canaux d'aspiration. Chaque conduite interne de récupération se situe dans l'élément aérodynamique, les canaux d'aspiration reliant chaque rainure d'évacuation à une conduite interne de récupération. Une dépression est créée dans les canaux d'aspiration afin d'aider, par aspiration, l'eau ruisselant sur les peaux d'intrados et d'extrados à se diriger vers chaque rainure d'évacuation. Les canaux d'aspiration peuvent être répartis longitudinalement sur l'ensemble de la rainure d'évacuation afin d'aider l'eau à se diriger vers chaque rainure d'évacuation sur l'ensemble de l'envergure de l'élément aérodynamique.

En effet, cette dépression présente dans les canaux d'aspiration permet de générer un phénomène d'aspiration de l'eau ruisselant sur les peaux d'intrados et d'extrados de l'élément aérodynamique. Ainsi, grâce à ce phénomène d'aspiration, cette eau se dirige plus facilement des peaux d'intrados et d'extrados vers la rainure d'évacuation. Ensuite, cette dépression présente dans les canaux d'aspiration permet d'aspirer cette eau de chaque rainure d'évacuation et de la diriger vers une conduite interne de récupération afin d'être évacuée hors de l'élément aérodynamique.

Selon cet autre mode de réalisation de l'invention, chaque rainure d'évacuation peut se situer sur la totalité de l'envergure de l'élément aérodynamique. Cependant, lorsque cet autre mode de réalisation de l'invention est destiné à un élément aérodynamique tournant telle une pale de rotor d'un aéronef à voilure tournante, chaque rainure d'évacuation peut se situer sur l'ensemble de l'envergure de l'élément aérodynamique à l'exception d'une zone interne, comme évoqué précédemment, située à proximité de la première extrémité de l'élément aérodynamique.

Selon une première variante de cet autre mode de réalisation, chaque conduite interne de récupération est reliée à un moyen de pompage. Ce moyen de pompage génère ainsi une dépression dans chaque conduite interne de récupération qui se répercute dans les canaux d'aspiration générant ainsi le phénomène d'aspiration de l'eau ruisselant sur les peaux d'intrados et d'extrados de l'élément aérodynamique.

Chaque conduite interne de récupération est débouchante de l'élément aérodynamique à proximité de la première extrémité afin d'être reliée au moyen de pompage. Par contre, chaque conduite interne de récupération est non débouchante au niveau de la seconde extrémité afin que la dépression ainsi générée se répercute uniquement dans les canaux d'aspiration.

En outre, pour permettre une bonne aspiration de l'eau ruisselant sur les peaux d'intrados et d'extrados de l'élément aérodynamique, le nombre de canaux d'aspiration doit être réparti sur la totalité de la rainure d'évacuation. La conduite interne de récupération doit aussi être maintenue en température positive pour éviter la formation d'un bouchon de glace qui annulerait l'effet d'aspiration. Par exemple, un système de dégivrage électrothermique peut être utilisé pour maintenir cette eau sous forme liquide dans la conduite interne de récupération. L'eau est ensuite évacuée par l'intermédiaire de chaque conduite interne de récupération vers le moyen de pompage.

Selon une seconde variante de cet autre mode de réalisation, de l'air chaud sous pression circule à grande vitesse dans chaque conduite interne de récupération générant ainsi une dépression dans les canaux d'aspiration et, par suite, le phénomène d'aspiration de l'eau ruisselant sur les peaux d'intrados et d'extrados de l'élément aérodynamique. Pour évacuer cet air sous pression qui se charge progressivement de l'eau aspirée, chaque conduite interne de récupération est débouchante au niveau de la seconde extrémité libre. Chaque conduite interne de récupération est également débouchante à proximité de la première extrémité afin d'injecter cet air initialement sec sous pression. Cet air chaud sous pression est par exemple prélevé au niveau d'un moteur thermique de l'aéronef équipé de cet élément aérodynamique, et plus particulièrement en sortie d'un compresseur.

Par contre, l'air sous pression doit circuler uniquement dans chaque conduite interne de récupération sans se diriger dans les canaux d'aspiration afin que la dépression apparaisse dans les canaux d'aspiration. De fait, les dimensions des canaux sont importantes, et notamment fonction de la vitesse d'écoulement de l'air sous pression dans chaque conduite interne de récupération.

Les canaux d'aspiration et la conduite interne de récupération ont de préférence une section circulaire. Cependant, d'autres formes de sections peuvent être utilisée telles qu'une section elliptique par exemple.

Par exemple, la section circulaire d'une conduite interne a un rayon compris entre 5 millimètres et 10 millimètres.

Cet autre mode de réalisation, quelle que soit la variante, n'utilise pas la force centrifuge pour évacuer l'eau se trouvant dans la rainure d'évacuation. Cet autre mode de réalisation peut donc être appliqué aux éléments aérodynamiques fixes tels qu'une aile d'avion ou bien un empennage de tous types d'aéronefs.

En outre, la présence de ce réseau d'évacuation de l'eau, que constituent chaque conduite interne de récupération et les canaux d'aspiration, ne doit pas altérer la résistance mécanique et les propriétés aéroélastiques de l'élément aérodynamique. Par exemple, si l'élément aérodynamique comporte un ou plusieurs caissons structurels, ce réseau d'évacuation de l'eau est positionné à l'intérieur d'un seul et même caisson structurel, et les canaux d'aspiration qui traversent les éléments travaillants du caisson sont minimisés le long de l'envergure de la voilure.

Par ailleurs, quel que soit le mode de réalisation de l'invention, le dispositif anti-regel doit comporter au moins un élément chauffant situé au niveau de chaque rainure d'évacuation. En effet, pour être évacuée par le dispositif anti-regel selon l'invention, l'eau présente dans la rainure d'évacuation ne doit pas se transformer en givre ou bien en glace. Dans ce but, au moins un élément chauffant est situé au niveau de chaque rainure d'évacuation afin de maintenir l'eau présente dans la rainure d'évacuation sous forme liquide. Chaque élément chauffant est par exemple un élément électrothermique. Chaque élément chauffant peut également être constitué par une peinture ou bien un enduit chauffant tapissant le fond de la rainure d'évacuation.

De plus, cet élément chauffant permet de transformer en eau le givre ou la glace qui peuvent s'être formés dans la rainure d'évacuation avant la mise en fonctionnement du dispositif anti-regel selon l'invention, par exemple avant le démarrage de l'aéronef utilisant ce dispositif anti-regel.

De préférence, chaque élément chauffant situé au niveau de chaque rainure d'évacuation est alimenté électriquement de façon continue dès que les conditions atmosphériques sont propices à la formation de givre présente dans la rainure d'évacuation. Ainsi, tout risque de transformation en tout ou en partie de l'eau présente dans la rainure d'évacuation en givre ou en glace est écarté.

En effet, si cet élément chauffant était alimenté de façon alternative ou cyclique, de l'eau pourrait se transformer localement de façon transitoire dans la rainure d'évacuation en givre ou bien en glace, pouvant créer par la suite un bouchon dans cette rainure d'évacuation. L'eau ne pourrait temporairement plus se diriger vers cette rainure d'évacuation et circulerait de nouveau sur la peau d'intrados ou d'extrados, formant alors une barrière de regel.

En outre, chaque rainure d'évacuation ne doit pas dégrader les caractéristiques structurelles de l'élément aérodynamique. Chaque rainure d'évacuation est ainsi située en dehors de la structure principale travaillante de l'élément aérodynamique, par exemple dans une zone superficielle en dehors des longerons et des nervures permettant de reprendre les tensions centrifuges et/ou des cisaillements de flexion ou de torsion.

De même, chaque rainure d'évacuation ne doit pas dégrader significativement les performances aérodynamiques de l'élément aérodynamique, de sorte que le bilan global entre l'altération de la performance en conditions air sec et le gain de performance en conditions givrantes avec ce dispositif additionnel soit intéressant.

Sur la peau d'extrados, le dispositif anti-regel selon l'invention est de préférence positionné au minimum après le pic de dépression aérodynamique qui est créé sur cette peau d'extrados et de préférence au minimum 5% en corde après le pic de dépression aérodynamique. Ainsi, toute perturbation aérodynamique éventuellement induite par la rainure d'évacuation n'affecte pas ou bien de façon minimum les performances aérodynamiques de l'élément aérodynamique. Comme évoqué précédemment, le système de dégivrage assure le dégivrage de la peau d'extrados jusqu'à la rainure d'évacuation. Par exemple, la rainure d'évacuation est positionnée à une distance à partir du bord d'attaque, selon la corde de l'élément aérodynamique, correspondant à 15% de la corde de l'élément aérodynamique. Cette rainure d'évacuation est bien entendue positionnée dans une zone au-delà de laquelle le givre ne se forme pas sur l'élément aérodynamique.

Sur la peau d'intrados, le dispositif anti-regel selon l'invention est de préférence positionné juste après la limite de formation attendue du givre afin de préserver l'écoulement laminaire de la couche limite de l'air sur cette peau d'intrados le plus longtemps possible et ainsi ne pas augmenter significativement les forces aérodynamiques de traînée. Comme évoqué précédemment, le système de dégivrage assure le dégivrage de la peau d'intrados jusqu'à la rainure d'évacuation. Par exemple, la rainure d'évacuation est positionnée à une distance à partir du bord d'attaque, selon la corde de l'élément aérodynamique, correspondant à 25% de la corde de l'élément aérodynamique.

La tolérance sur ces positions de la rainure d'évacuation sur chaque peau d'intrados et d'extrados est par exemple +/- 10%de la corde de l'élément aérodynamique.

En outre, la rainure d'évacuation comporte une lèvre amont, un fond de rainure et une lèvre aval. La rainure d'évacuation comporte également un premier rayon de raccordement *R₁* entre la lèvre amont et chaque peau d'intrados et d'extrados et un second rayon de raccordement *R₂* entre la lèvre amont et le fond de rainure. Ainsi, le premier rayon de raccordement *R₁* et le second rayon de raccordement *R₂* permettent de guider efficacement l'eau vers le fond de rainure.

En effet, ces rayons de raccordement *R₁,R₂*, de préférence importants, permettent d'exploiter le phénomène de tension superficielle de Laplace entre deux milieux constitués ici par l'eau et la peau d'intrados ou d'extrados afin de guider le ruissellement de l'eau dans la rainure d'évacuation. De plus, ces rayons de raccordement *R₁,R₂* permettent de maximiser la pression d'adhérence entre chaque goutte d'eau qui est à une température proche de 0°C et les parois de la rainure d'évacuation.

Le premier rayon de raccordement *R₁* est par exemple compris entre 0 et 10 mm et le second rayon de raccordement *R₂* compris entre 1 et 10 mm. De préférence, le premier rayon de raccordement *R₁* est compris entre 1 et 2 mm et le second rayon de raccordement *R₂* est compris entre 1 et 2 mm.

Par ailleurs, le fond de rainure est formé par une paroi de fond de rainure *P_{F}* reliée à la lèvre amont par le second rayon de raccordement *R₂* et par une paroi de lèvre aval *P_{L}.* La lèvre aval est alors formée par la paroi de lèvre aval *P_{L}* et par la peau d'intrados ou d'extrados. La paroi de fond de rainure *P_{F}* et la paroi de lèvre aval *P_{L}* forment alors un angle de fond de rainure *β*. De même, la paroi de lèvre aval *P_{L}* et la peau d'intrados ou d'extrados forment un angle de lèvre aval *α*. Ainsi, l'angle de fond de rainure β et l'angle de lèvre aval α permettent d'éviter efficacement que l'eau soit refoulée en dehors de la rainure d'évacuation et forment une barrière de regel.

En effet, ces angles de fond de rainure *β* et de lèvre aval *α* sont des angles aigus, c'est-à-dire inférieur à 90° afin d'éviter que l'eau ne franchisse par capillarité la lèvre aval et soit refoulée de la rainure d'évacuation. De plus, ces angles sont avantageusement identiques, la paroi de fond de rainure étant par construction géométrique parallèle à la surface extérieure de l'élément aérodynamique, c'est-à-dire à la peau d'intrados ou la peau d'extrados.

En outre, lorsqu'une quantité d'eau importante se trouve dans la rainure d'évacuation, les angles de fond de rainure β et de lèvre aval α doivent être suffisamment élevés pour éviter que l'eau ne franchisse la lèvre aval et soit refoulée hors de la rainure d'évacuation. Ces angles de fond de rainure β et de lèvre aval α sont par exemple supérieurs à 30°.

Les dimensions de la rainure d'évacuation sont également importantes pour d'une part que la totalité de l'eau ruisselant sur les peaux d'intrados et d'extrados soit dirigée dans la rainure d'évacuation et d'autre part que la totalité de l'eau présente dans cette rainure d'évacuation reste dans cette rainure d'évacuation jusqu'à son expulsion.

Le film d'eau ruisselant sur les peaux d'intrados et d'extrados a généralement une épaisseur comprise entre 1 à 2 millimètres (1 à 2mm). La hauteur de la rainure de récupération doit donc être supérieure à 2mm, cette hauteur de la rainure d'évacuation s'étendant de la peau d'intrados ou d'extrados jusqu'à la paroi de fond de rainure *P_{F}* selon une épaisseur de l'élément aérodynamique.

Par contre, de façon générale, il faut éviter de créer, sur un profil soumis à un écoulement d'air, un ou des obstacles dont la hauteur est supérieure à l'épaisseur de la couche limite de cet écoulement afin de limiter les perturbations aérodynamiques sur ce profil. Ces perturbations aérodynamiques se traduisent essentiellement par l'augmentation la trainée aérodynamique de ce profil.

Dans le mode de réalisation préféré de l'invention, c'est-à-dire une pale d'un aéronef à voilure tournante, l'épaisseur de la couche limite de l'écoulement d'air sur cette pale, au niveau de la rainure d'évacuation, peut varier par exemple entre 0.4 et 3 mm environ. Plus précisément et selon la taille de l'aéronef, l'épaisseur de la couche limite peut varier 0.4 à 0.6mm environ dans le cas d'un écoulement laminaire et de 1.3 à 3mm pour un écoulement turbulent.

Cependant, pour évacuer efficacement le film d'eau ruisselant sur les peaux d'intrados et d'extrados, la hauteur de la rainure de récupération doit être supérieure à 2mm, et peut donc être supérieure à la hauteur de la couche limite. De fait et par souci d'efficacité de la rainure d'évacuation et, par suite, du dispositif anti-regel, on doit accepter une dégradation de performance aérodynamique de l'élément aérodynamique due à la présence de cette rainure d'évacuation.

En outre, l'ouverture de la rainure d'évacuation, formée par la distance entre la lèvre amont et la lèvre aval, doit être suffisante pour collecter les gouttes d'eau ruisselant sur l'élément aérodynamique, y compris les plus grosses créées par le regroupement de plusieurs gouttes plus petites. Si la longueur d'ouverture de la rainure d'évacuation est trop petite, elle est alors franchissable par ces gouttes d'eau qui continuent alors de ruisseler sur les peaux de l'élément aérodynamique et peuvent former une barrière de regel. A contrario, cette longueur d'ouverture ne doit pas être trop grande pour ne pas perturber l'écoulement d'air sur les peaux d'intrados et d'extrados.

De plus, on peut assimiler les plus grosses gouttes d'eau se formant sur les peaux d'intrados ou d'extrados à des sphères de 2mm de diamètre. La longueur d'ouverture doit alors être au minimum égale à deux diamètres de gouttes, soit 4 mm, pour permettre que ces gouttes soient captées par la rainure d'évacuation, le premier rayon de raccordement *R₁* au niveau de la lèvre amont facilitant également efficacement le cheminement de l'eau dans la rainure d'évacuation. La longueur d'ouverture peut être limitée à 20mm, la longueur totale de la corde d'un élément aérodynamique étant par exemple d'environ 400 mm pour un aéronef de l'ordre de 5 tonnes et d'environ 600 mm pour un aéronef de l'ordre de 10 tonnes.

Par exemple, pour un aéronef de l'ordre de 5 tonnes dont la corde de chaque pale à une longueur totale d'environ 400 mm, une rainure d'évacuation d'une hauteur de 2mm et d'une longueur d'ouverture de 4 mm génère une augmentation de l'ordre de 4% de la traînée totale de chaque pale alors qu'une rainure d'évacuation d'une hauteur de 3mm et d'une longueur d'ouverture de 15mm génère une augmentation pouvant atteindre 20% de cette traînée totale de chaque pale.

De même, pour un aéronef de l'ordre de 10 tonnes dont la corde de chaque pale à une longueur totale d'environ 600 mm, une rainure d'évacuation d'une hauteur de 2mm et d'une longueur d'ouverture de 4 mm génère une augmentation de l'ordre de 1% de la traînée totale de chaque pale alors qu'une rainure d'évacuation d'une hauteur de 3mm et d'une longueur d'ouverture de 15mm génère une augmentation pouvant atteindre 4% de cette traînée totale de chaque pale.

Ainsi, selon les dimensions de l'élément aérodynamique et les caractéristiques de l'aéronef, la rainure d'évacuation a pour dimensions une longueur d'ouverture comprise entre 4 et 20mm, associées à une hauteur comprise entre 2 et 5mm. Cette hauteur de la rainure d'évacuation s'étend de la peau d'intrados ou d'extrados jusqu'à la paroi de fond de rainure *P_{F}* selon une épaisseur de l'élément aérodynamique et la longueur d'ouverture s'étend de la lèvre amont jusqu'à l'aval de la lèvre aval selon la corde de l'élément aérodynamique.

Enfin, afin de permettre l'évacuation d'une quantité d'eau suffisante, la longueur de fond de la rainure d'évacuation, qui s'étend du point de raccordement entre le second rayon de raccordement *R₂* et la paroi de fond de rainure jusqu'à l'aval du fond de rainure selon la corde de l'élément aérodynamique, est au moins égale, et de préférence supérieure, à la longueur d'ouverture. Cette longueur de fond de la rainure d'évacuation peut ainsi être comprise entre 4 et 30mm.

Ces dimensions de la rainure d'évacuation peuvent évoluer le long de l'envergure de l'élément aérodynamique, par exemple pour s'adapter à la quantité d'eau présente dans la rainure d'évacuation qui augmente notamment dans le mode de réalisation préféré de l'invention. Une telle évolution des dimensions de la rainure d'évacuation permet également de limiter, dans ce mode de réalisation préféré de l'invention, les perturbations aérodynamiques de trainée liées à la présence de cette rainure dans les zones où l'effet de l'apparition givre est moindre, c'est-à-dire au niveau de la partie interne de l'élément aérodynamique. Cependant, ces dimensions sont de préférence constantes afin d'une part de favoriser la fabrication de l'élément aérodynamique et d'autre part de ne pas générer de variations significatives dans les propriétés mécaniques de l'élément aérodynamique le long de son envergure. Avantageusement, la rainure d'évacuation peut être un élément rapporté à une structure de l'élément aérodynamique spécialement adaptée pour son intégration. Les dimensions de la rainure d'évacuation doivent donc prendre en compte la quantité maximum d'eau à évacuer notamment à proximité de la seconde extrémité de l'élément aérodynamique afin d'éviter que la rainure d'évacuation déborde et que de l'eau soit refoulée sur la peau d'intrados, formant alors une barrière de regel.

De préférence, la rainure d'évacuation a une longueur d'ouverture de 6mm, une hauteur de 3mm et une longueur de fond 9 mm, avec des angles de fond de rainure *β* et de lèvre aval *α* de 45°.

Il est également important de ne pas obstruer partiellement ou totalement la rainure d'évacuation du dispositif anti-regel selon l'invention, notamment dans le cas où l'élément aérodynamique évolue dans un environnement poussiéreux. Un tel environnement poussiéreux est généralement rencontré dans des conditions atmosphériques plutôt sèches, donc où le risque de givrage est faible, voire nul. Un tel environnement poussiéreux est plus particulièrement constitué par la présence de sable qui est associé à des températures importantes, donc sans risque de givrage. Il est alors possible d'utiliser un cache, par exemple en matière plastique, venant protéger la rainure d'évacuation afin d'éviter la pénétration de particules de poussière ou de sable lorsqu'il n'y a pas de risque d'apparition de givre.

La présente invention a aussi pour objet un élément aérodynamique d'un aéronef, cet élément aérodynamique comportant une peau d'intrados et une peau d'extrados s'étendant longitudinalement selon une envergure de l'élément aérodynamique d'une première extrémité à une seconde extrémité de cet élément aérodynamique. Cet élément aérodynamique comporte également un bord d'attaque s'étendant longitudinalement selon l'envergure de l'élément aérodynamique et reliant dans une zone amont de l'élément aérodynamique de l'élément aérodynamique les peaux d'intrados et d'extrados. L'élément aérodynamique est équipé d'un système de dégivrage positionné au niveau de ce bord d'attaque et d'un dispositif anti-regel comme précédemment décrit.

Cet élément aérodynamique est plus particulièrement destiné à un aéronef à voilure tournante, l'élément aérodynamique étant une pale d'un rotor de l'aéronef à voilure tournante.

L'invention et ses avantages apparaîtront avec plus de détails dans le cadre de la description qui suit avec des exemples de réalisation donnés à titre illustratif en référence aux figures annexées qui représentent :
- la figure 1, une vue en perspective d'un élément aérodynamique équipé un dispositif anti-regel selon l'invention,
- la figure 2, une section transversale d'un élément aérodynamique équipé du mode de réalisation préféré de l'invention,
- les figures 3 et 4, deux sections transversales d'un élément aérodynamique équipé d'un autre mode de réalisation de l'invention,
- la figure 5, une vue de détail d'une rainure d'évacuation d'un dispositif anti-regel selon l'invention,
- la figure 6, un aéronef à voilure tournante, et
- la figure 7, un rotor d'un aéronef à voilure tournante équipé un dispositif anti-regel selon l'invention.

Les éléments présents dans plusieurs figures distinctes sont affectés d'une seule et même référence.

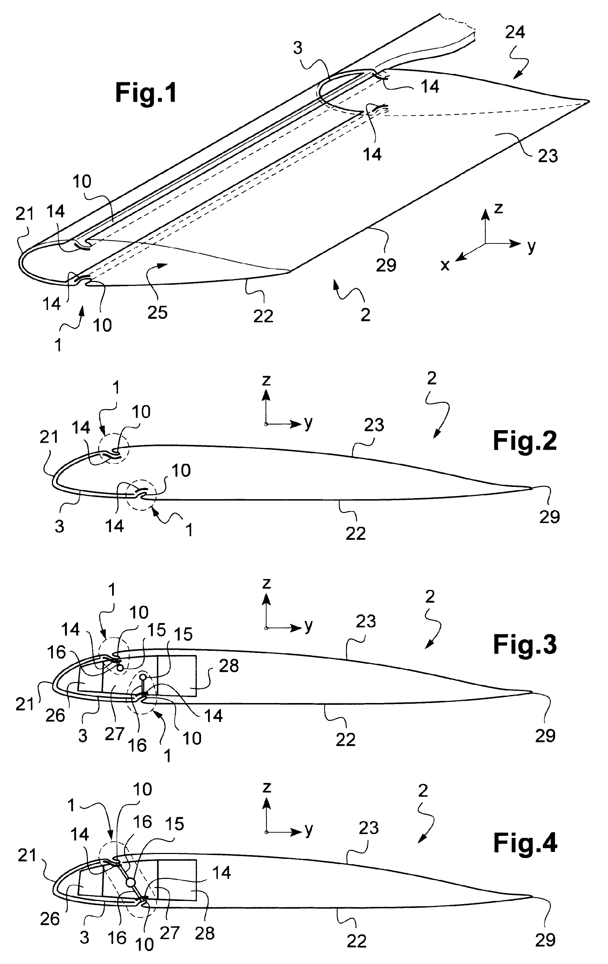

On note que trois directions X, Y et Z orthogonales les unes par rapport aux autres sont représentées sur les figures 1 à 5.

La direction X est dite longitudinale et dirigée selon l'envergure de chaque élément aérodynamique 2.

Une autre direction Y est dite transversale et dirigée selon la corde de chaque élément aérodynamique 2.

Enfin, une troisième direction Z est dite d'élévation et correspond aux dimensions en hauteur des structures décrites. Le terme « épaisseur » est alors relatif à une dimension en élévation du dispositif selon cette direction d'élévation.

La figure 1 représente un élément aérodynamique 2, qui peut être par exemple une aile d'un avion, une pale d'un rotor d'un aéronef à voilure tournante ou bien un empennage. Cet élément aérodynamique 2 comporte une peau d'intrados 22 et une peau d'extrados 23 s'étendant longitudinalement selon une envergure de l'élément aérodynamique 2 d'une première extrémité 24 à une seconde extrémité 25 de cet élément aérodynamique 2. Cet élément aérodynamique 2 s'étend transversalement d'un bord d'attaque 21 jusqu'à un bord de fuite 29. Le bord d'attaque 21 et le bord de fuite 29 s'étendent longitudinalement selon l'envergure de l'élément aérodynamique 2 et relient les peaux d'intrados 22 et d'extrados 23.

L'élément aérodynamique 2 est équipé d'un système de dégivrage 3 positionné au niveau de son bord d'attaque 21. Ce système de dégivrage 3 est par exemple un système de dégivrage électrothermique. Un tel système de dégivrage 3 peut permettre d'éviter la formation de givre ou de glace au niveau du bord d'attaque 21 ou bien de faire fondre le givre ou la glace se formant sur ce bord d'attaque 21. Dans les deux cas, de l'eau sous forme d'un film ou de gouttes peut ruisseler sur ce bord d'attaque 21 de l'élément aérodynamique 2 et former une barrière de regel sur les peaux d'intrados 22 et d'extrados 23 en aval de ce système de dégivrage 3, dégradant les performances aérodynamiques de l'élément aérodynamique 2.

Cet élément aérodynamique 2 comporte également un dispositif anti-regel 1 afin d'éviter la formation de cette barrière de regel. Ce dispositif anti-regel 1 récupère l'eau ruisselant sur les peaux d'intrados 22 et d'extrados 23 et l'évacue. Différentes sections transversales d'un tel élément aérodynamique 2 sont représentées sur les figures 2 à 4, correspondant à différents modes de réalisation de ce dispositif anti-regel 1.

De façon commune, ce dispositif anti-regel 1 comporte une rainure d'évacuation 10 s'étendant longitudinalement selon l'envergure de l'élément aérodynamique 1 sur chaque peau d'intrados 22 et d'extrados 23. Chaque rainure d'évacuation 10 est positionnée transversalement juste en aval du système de dégivrage 10 afin de récupérer et d'évacuer l'eau ruisselant de l'amont vers l'aval sur les peaux d'intrados 22 et d'extrados 23.

Chaque rainure d'évacuation 10 comporte une lèvre amont 11, un fond de rainure 12 et une lèvre aval 13. La lèvre amont 11 est reliée à la peau d'intrados 22 ou d'extrados 23 par un premier rayon de raccordement *R₁*. Le fond de rainure 12 est formé par une paroi de fond de rainure *P_{F}* qui est reliée à la lèvre amont 11 par un second rayon de raccordement *R₂* et par une paroi de lèvre aval *P_{L}.* La lèvre aval 13 est formée par la paroi de lèvre aval *P_{L}* et par la peau d'intrados 22 ou d'extrados 23.

La paroi de fond de rainure *P_{F}* et la paroi de lèvre aval *P_{L}* forment un angle de fond de rainure *β* et la paroi de lèvre aval *P_{L}* et la peau d'intrados 22 ou d'extrados 23 forment un angle de lèvre aval *α*.

Les rayons de raccordement *R₁,R₂* sont de préférence importants. Par exemple, le premier rayon de raccordement *R₁* est compris entre 0 et 10 mm et le second rayon de raccordement *R₂* compris entre 1 et 10 mm. De préférence, le premier rayon de raccordement *R₁* est compris entre 1 et 2 mm et le second rayon de raccordement *R₂* est compris entre 1 et 2 mm.

De plus, les angles de fond de rainure *β* et de lèvre aval *α* sont des angles aigus, c'est-à-dire inférieurs à 90°. Par ailleurs, la paroi de fond de rainure *P_{F}* étant par construction géométrique sensiblement parallèle à la surface extérieure de l'élément aérodynamique 2, c'est-à-dire à la peau d'intrados 22 ou la peau d'extrados 23, ces deux angles *β* et *α* sont égaux et supérieurs à 30°.

Outre les angles *α,β* et les rayons de raccordement *R₁,R₂,* la rainure d'évacuation 10 est caractérisée par une longueur de fond *L_{F},* une hauteur *H_{R}* et une ouverture d'ouverture *L_{O}.* La longueur de fond *L_{F}* s'étend du point de raccordement entre le second rayon de raccordement *R₂* et la paroi de fond de rainure *P_{F}* jusqu'à l'aval du fond de rainure 12 selon la corde de l'élément aérodynamique 2 alors par la hauteur *H_{R}* s'étend de la peau d'intrados 22 ou d'extrados 23 jusqu'à la paroi de fond de rainure *P_{F}* selon l'épaisseur de l'élément aérodynamique 2. La longueur d'ouverture *L_{O}* de la rainure d'évacuation 10 correspond à la distance entre la lèvre amont 11 et la lèvre aval 13.

Par exemple, la longueur d'ouverture *Lₒ* est comprise entre 4 et 20mm, la hauteur *H_{R}* est comprise entre 2 et 5mm et la longueur de fond *L_{F}* est comprise entre 4 et 30mm. De préférence, la rainure d'évacuation 10 a une longueur d'ouverture *Lₒ* de 6mm, une hauteur *H_{R}* de 3mm et une longueur de fond *L_{F}* de 9mm. Les angles de fond de rainure *β* et de lèvre aval *α* sont de préférence égaux à 45°.

Ces dimensions de la rainure d'évacuation 10 sont constantes sur l'ensemble de l'envergure de l'élément aérodynamique, mais elles peuvent cependant être évolutives le long de cette envergure.

La forme particulière de la rainure d'évacuation 10 et ses dimensions permettent de collecter et de récupérer l'eau ruisselant sur les peaux d'intrados 22 et d'extrados 23, tout en évitant qu'elle soit refoulée et forme une barrière de regel sur les peaux d'intrados 22 et d'extrados 23.

Les rayons de raccordement *R₁,R₂* permettent notamment de guider efficacement l'eau ruisselant sur la peau d'intrados 22 ou d'extrados 23 vers le fond de cette rainure d'évacuation 10, les angles *α,β* évitant que cette eau soit refoulée hors de cette rainure d'évacuation 10.

De plus, ces dimensions permettent de limiter les perturbations de l'écoulement d'air circulant sur les peaux d'intrados 22 et d'extrados 23 et, par suite, l'apparition de perturbations aérodynamiques dues à la présence de cette rainure d'évacuation 10.

Ce dispositif anti-regel 1 selon l'invention comporte également un élément chauffant 14 situé au niveau de chaque rainure d'évacuation 10. La présence de cet élément chauffant 14 évite que l'eau se trouvant dans la rainure d'évacuation 10 ou sur ses parois ne se transforme en givre ou bien en glace et ne puisse alors pas être expulsée. Chaque élément chauffant 14 est par exemple un élément électrothermique.

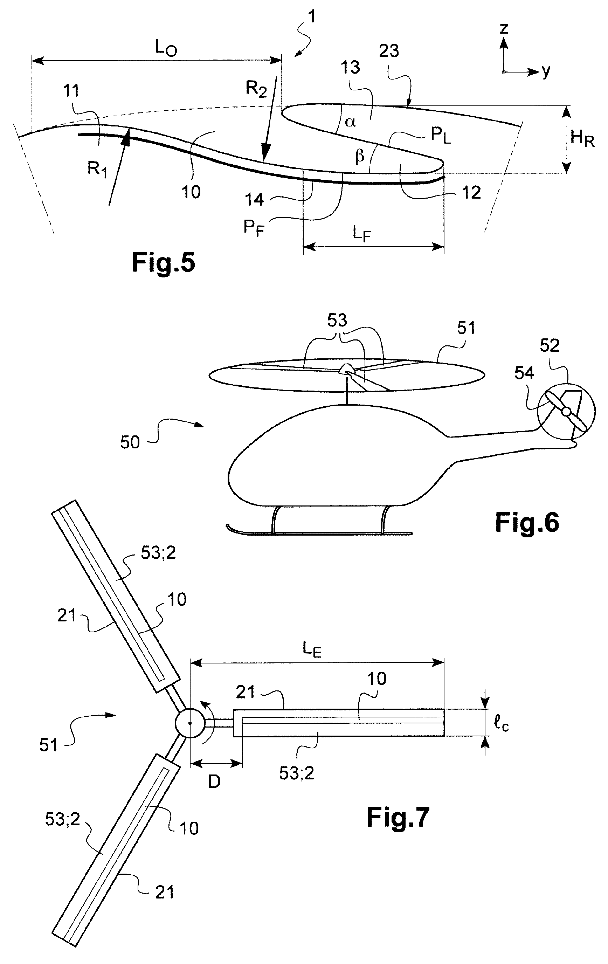

La figure 2 représente un mode de réalisation préféré de l'invention destiné à un élément aérodynamique 2 tournant et plus particulièrement à une pale 53,54 d'un rotor 51,52 d'un aéronef 50 à voilure tournante. Un tel aéronef 50 est représenté sur la figure 6. Ce rotor 51,52 tournant provoque l'apparition d'une force centrifuge dans chaque pale 53,54 orientée de la première extrémité 24 vers la seconde extrémité 25. Cette force centrifuge entraîne alors l'eau s'accumulant dans chaque rainure d'évacuation 10 vers la seconde extrémité 25 et permet d'expulser cette eau hors de la rainure d'évacuation 10, puis, par suite, hors de la pale 53,54, chaque rainure d'évacuation 10 étant débouchante au niveau de cette seconde extrémité 25.

Chaque rainure d'évacuation 10 du dispositif anti-regel 1 peut se situer sur la totalité de l'envergure de l'élément aérodynamique 2, de sa première extrémité 24 jusqu'à sa seconde extrémité 25, comme représenté sur la figure 1.

Cependant, ce rotor 51,52 étant tournant, la vitesse de l'écoulement d'air générant des forces aérodynamiques de portance et de trainée sur chaque pale 53,54 est différente selon la position en envergure sur la pale 53,54. Notamment, ces forces aérodynamiques de portance et de trainée sont faibles dans une zone située à proximité du centre de rotation du rotor 51,52 et en conséquence, la présence d'une barrière de regel dans cette zone n'a que peu d'effets sur les performances aérodynamiques de l'élément aérodynamique 2.

De fait, chaque rainure d'évacuation 10 peut débuter à partir d'une distance *D* du centre de rotation de ce rotor 51,52, comme représenté sur la figure 7, et déboucher au niveau de la seconde extrémité 25. Par exemple, cette distance *D* correspond à 50% de l'envergure totale *L_{E}* de l'élément aérodynamique 2.

De plus, pour de ne pas dégrader les performances aérodynamiques de l'élément aérodynamique 2, chaque rainure d'évacuation 10 est positionnée sur les peaux d'intrados 22 et d'extrados 23 afin de limiter l'apparition de perturbations aérodynamiques, voire de ne générer aucune perturbation aérodynamique.

Par exemple, sur la peau d'extrados 23, la rainure d'évacuation 10 est positionnée transversalement à une distance à partir du bord d'attaque 21 correspondant à 15% de la corde *l_{C}* de l'élément aérodynamique 2.

De même, sur la peau d'intrados 22, la rainure d'évacuation 10 est positionnée transversalement à une distance à partir du bord d'attaque 21 correspondant à 25% de la corde *l_{C}* de l'élément aérodynamique 2.

La tolérance sur ces positions de la rainure d'évacuation 10 sur chaque peau d'intrados 22 et d'extrados 23 est par exemple +/-10% de la corde *l_{C}* de l'élément aérodynamique 2.

Les figures 3 et 4 représentent deux modes de réalisation de l'invention dont le principe de fonctionnement est identique.

Le dispositif anti-regel 1 représenté sur la figure 3 comporte deux conduites internes de récupération 15 et des canaux d'aspiration 16 reliant une rainure d'évacuation 10 à une conduite interne de récupération 15. Les conduites internes de récupération 15 et les canaux d'aspiration 16 se situent dans l'élément aérodynamique 2. Les canaux d'aspiration 16 sont répartis longitudinalement sur l'ensemble de chaque rainure d'évacuation 10, selon l'envergure de l'élément aérodynamique 2.

Le dispositif anti-regel 1 représenté sur la figure 4 comporte une seule conduite interne de récupération 15 et des canaux d'aspiration 16 reliant chaque rainure d'évacuation 10 à la conduite interne de récupération 15. La conduite interne de récupération 15 et les canaux d'aspiration 16 se situent dans l'élément aérodynamique 2, les canaux d'aspiration 16 étant répartis longitudinalement sur l'ensemble de chaque rainure d'évacuation 10, selon l'envergure de l'élément aérodynamique 2.

Une dépression est créée dans les canaux d'aspiration 16 afin d'aider, par aspiration, l'eau ruisselant sur les peaux d'intrados 22 et d'extrados 23 à se diriger vers chaque rainure d'évacuation 10.

Cette dépression présente dans les canaux d'aspiration 16 peut également permettre d'aspirer cette eau de chaque rainure d'évacuation 10 et de la diriger vers une conduite interne de récupération 15 afin d'être évacuée hors de l'élément aérodynamique 2. Cette dépression peut être générée de différentes façons, indépendamment du dispositif anti-regel 1 représenté sur les figures 3 et 4.

Par exemple, chaque conduite interne de récupération 15 est reliée à un moyen de pompage. Ce moyen de pompage génère ainsi une dépression dans chaque conduite interne de récupération 15 qui se répercute dans les canaux d'aspiration 16 générant ainsi le phénomène d'aspiration de l'eau ruisselant sur les peaux d'intrados 22 et d'extrados 23 de l'élément aérodynamique 2. Chaque conduite interne de récupération 15 est débouchante de l'élément aérodynamique 2 uniquement à proximité de la première extrémité 24 afin d'être reliée au moyen de pompage et de permettre l'évacuation de l'eau.

Selon un autre exemple, de l'air sous pression circule à grande vitesse dans chaque conduite interne de récupération 15 générant ainsi une dépression dans les canaux d'aspiration 16 et, par suite, le phénomène d'aspiration de l'eau ruisselant sur les peaux d'intrados 22 et d'extrados 23. Chaque conduite interne de récupération 15 est débouchante à proximité de la première extrémité 24 afin d'injecter cet air sous pression. Chaque conduite interne de récupération 15 est également débouchante au niveau de la seconde extrémité 25 libre afin d'une part d'évacuer cet air sous pression et d'autre part d'expulser l'eau venant des rainures d'évacuation 10.

Par ailleurs, l'élément aérodynamique 2 peut comporter plusieurs caissons structurels 26,27,28. Afin de ne pas dégrader les caractéristiques mécaniques de cet élément aérodynamique 2, chaque conduite interne de récupération 15 et les canaux d'aspiration 16 sont situés à l'intérieur d'un seul et même caisson structurel 27.

Comme évoqué précédemment, les dispositifs anti-regel 1 représentés sur les figures 3 et 4 comportent au moins un élément chauffant 14 situé au niveau de chaque rainure d'évacuation 10 afin d'éviter que l'eau présente dans la rainure d'évacuation10 ne soit transformée en givre ou bien en glace.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Elément aérodynamique (2) muni d'un dispositif anti-regel (1), ledit élément aérodynamique (2) comportant une peau d'intrados (22) et une peau d'extrados (23) s'étendant longitudinalement selon l'envergure dudit élément aérodynamique (2) d'une première extrémité (24) dudit élément aérodynamique (2) à une seconde extrémité (25) dudit élément aérodynamique (2) ainsi qu'un bord d'attaque (21) s'étendant longitudinalement selon ladite envergure et reliant dans une zone amont dudit élément aérodynamique (2) selon une corde dudit élément aérodynamique (2) lesdites peaux d'intrados (22) et d'extrados (23), ledit élément aérodynamique (2) étant équipé d'un système de dégivrage (3) positionné au niveau dudit bord d'attaque (21), ledit dispositif anti-regel (1) comportant une rainure d'évacuation (10) apte à s'étendre longitudinalement selon ladite envergure sur chaque peau d'intrados (22) et d'extrados (23), chaque rainure d'évacuation (10) étant apte à être positionnée juste en aval dudit système de dégivrage (3) transversalement selon ladite corde afin de récupérer et d'évacuer l'eau ruisselant sur ledit élément aérodynamique (2) de l'amont dudit élément aérodynamique (2) vers l'aval dudit élément aérodynamique (2), **caractérisé en ce que** chaque rainure d'évacuation (10) comporte une lèvre amont (11), un fond de rainure (12) et une lèvre aval (13) ainsi que d'une part un premier rayon de raccordement *R₁* entre ladite lèvre amont (11) et chaque peau d'intrados (22) et d'extrados (23) et d'autre part un second rayon de raccordement *R₂* entre ladite lèvre amont (11) et ledit fond de rainure (12), ledit premier rayon de raccordement *R₁* et ledit second rayon de raccordement *R₂* permettant de guider ladite eau vers ledit fond de rainure (12).

2. Elément aérodynamique (2) selon la revendication 1,
**caractérisé en ce que** ledit fond de rainure (12) est formé par une paroi de fond de rainure *P_{F}* reliée à ladite lèvre amont (11) par ledit premier rayon de raccordement *R₁* et par une paroi de lèvre aval *P_{L}* alors que ladite lèvre aval(13) est formée par ladite paroi de lèvre aval *P_{L}* et par ladite peau d'intrados (22) ou d'extrados (23), ladite paroi de fond de rainure *P_{F}* et ladite paroi de lèvre aval *P_{L}* formant un angle de fond de rainure *β* alors que ladite paroi de lèvre aval *P_{L}* et ladite peau d'intrados (22) ou d'extrados (23) forment un angle de lèvre aval α, ledit angle de fond de rainure β et ledit angle de lèvre aval *α* permettant d'éviter que ladite eau soit refoulée en dehors de ladite rainure d'évacuation (10).

3. Elément aérodynamique (2) selon l'une quelconque des revendications 1 à 2,
**caractérisé en ce que** ladite rainure d'évacuation (10) a une longueur comprise entre 4 et 20 mm, ladite longueur étant prise selon ladite corde dudit élément aérodynamique (2).

4. Elément aérodynamique (2) selon l'une quelconque des revendications 1 à 2,
**caractérisé en ce que** ladite rainure d'évacuation (10) a une hauteur comprise entre 2 et 10 mm, ladite hauteur étant prise selon une épaisseur dudit élément aérodynamique (2).

5. Elément aérodynamique (2) selon l'une quelconque des revendications 1 à 4,
**caractérisé en ce que** ledit premier rayon de raccordement *R₁* est compris entre 0 et 10 millimètres.

6. Elément aérodynamique (2) selon l'une quelconque des revendications 1 à 5,
**caractérisé en ce que** ledit second rayon de raccordement *R₂* est compris entre 1 et 10 millimètres.

7. Elément aérodynamique (2) selon l'une quelconque des revendications 2 à 6,
**caractérisé en ce que** ledit angle de fond de rainure *β* est inférieur à 90°.

8. Elément aérodynamique (2) selon l'une quelconque des revendications 2 à 7,
**caractérisé en ce que** ledit angle de lèvre aval *α* est inférieur à 90°.

9. Elément aérodynamique (2) selon l'une quelconque des revendications 1 à 8,
**caractérisé en ce que** ledit dispositif anti-regel (1) comporte au moins un élément chauffant (14) au niveau de chaque rainure d'évacuation (10).

10. Elément aérodynamique (2) selon l'une quelconque des revendications 1 à 9,
**caractérisé en ce que**, ladite première extrémité (24) étant fixée à un aéronef (50) alors que ladite seconde extrémité (25) est libre, ladite rainure d'évacuation (10) est débouchante au niveau de ladite seconde extrémité (25).

11. Elément aérodynamique (2) selon l'une quelconque des revendications 1 à 10,
**caractérisé en ce que** ledit dispositif anti-regel (1) comporte au moins une conduite interne de récupération (15) s'étendant longitudinalement selon l'envergure dudit élément aérodynamique (2) et des canaux d'aspiration (16), chaque conduite interne de récupération (15) étant située à l'intérieur dudit élément aérodynamique (2) et lesdits canaux d'aspiration (16) reliant chaque rainure d'évacuation (10) à une conduite interne de récupération (15), une dépression étant créée dans lesdits canaux d'aspiration (16) pour aspirer ladite eau afin de la diriger vers ledit fond de rainure (12).

12. Elément aérodynamique (2) selon la revendication 11,
**caractérisé en ce que** chaque conduite interne de récupération (15) est reliée à un moyen de pompage (17) afin de générer ladite dépression dans lesdits canaux d'aspiration (16).

13. Elément aérodynamique (2) selon l'une quelconque des revendications 11 à 12,
**caractérisé en ce que**, ladite première extrémité (24) étant fixée à un aéronef (50) alors que ladite seconde extrémité (25) est libre, un air sous pression circule à grande vitesse dans chaque conduite interne de récupération (15) afin de générer ladite dépression dans lesdits canaux d'aspiration (16), chaque conduite interne de récupération (15) étant débouchante au niveau de ladite seconde extrémité (25) et ledit air circulant vers ladite seconde extrémité (25).

14. Elément aérodynamique (2) selon l'une quelconque des revendications 1 à 13,
**caractérisé en ce que** ledit système de dégivrage (3) est un système de dégivrage électrothermique.

15. Elément aérodynamique (2) selon l'une quelconque des revendications 1 à 14,
**caractérisé en ce que** ledit élément aérodynamique (2) est une pale (53,54) d'un rotor (51,52) d'un aéronef à voilure tournante (50).

16. Elément aérodynamique (2) selon la revendication 15,
**caractérisé en ce que** ladite rainure d'évacuation (10) débute à une distance de ladite première extrémité (24) correspondant à 35% de l'envergure totale de ladite pale (53,54) et s'étend selon ladite envergure de ladite pale (53,54) jusqu'à ladite seconde extrémité (25).

## Patentansprüche

1. Aerodynamisches Element (2), welches mit einer Frostschutzvorrichtung (1) versehen ist, wobei das aerodynamische Element (2) eine druckseitige Haut (22) und eine saugseitige Haut (23) aufweist, die sich längs über die Spannweite des aerodynamischen Elements (2) von einem ersten Ende (24) des aerodynamischen Elements (2) zu einem zweiten Ende (25) des aerodynamischen Elements (2) erstrecken, sowie eine Vorderkante (21), die sich längs über die Spannweite erstreckt und in einem Bereich vor dem aerodynamischen Element (2) entlang einer Sehne des aerodynamischen Elements (2) die druckseitige Haut (22) und die saugseitige Haut (23) verbindet, wobei das aerodynamische Element (2) mit einem Enteisungssystem (3) ausgerüstet ist, das auf der Höhe der Vorderkante (21) positioniert ist,
wobei die Frostschutzvorrichtung (1) eine Abflussrinne (10) aufweist, die sich in Längsrichtung über die Spannweite sowohl auf der druckseitigen Haut (22) als auch auf der saugseitigen Haut (23) erstrecken kann, wobei jede Abflussrinne (10) direkt hinter dem Enteisungssystem (3) quer zu der Sehne positioniert sein kann, um das Wasser, das auf dem aerodynamischen Element (2) von Vorderseite des aerodynamischen Elements (2) zu der Hinterseite des aerodynamischen Elements (2) rinnt, abzuleiten,
**dadurch gekennzeichnet, dass** jede Abflussrinne (10) eine vordere Lippe (11), einen Rinnenboden (12) und eine hintere Lippe (13) aufweist sowie einerseits einen ersten Verbindungsradius R₁ zwischen der vorderen Lippe (11) und sowohl der druckseitigen Haut (22) als auch der saugseitigen Haupt (23), und andererseits einen zweiten Verbindungsradius R₂ zwischen der vorderen Lippe (11) und dem Rinnenboden (12) aufweist, wobei der erste Verbindungsradius R₁ und der zweite Verbindungsradius R₂ es ermöglichen, das Wasser zum Rinnenboden (12) zu leiten.

2. Aerodynamisches Element (2) nach Anspruch 1,
**dadurch gekennzeichnet, dass** der Rinnenboden (12) durch eine Bodenwand P_{F} der Rinne gebildet wird, die mit der vorderen Lippe (11) über den ersten Verbindungsradius R₁ und durch eine Wand der hinteren Lippe P_{L} verbunden ist, während die hintere Lippe (13) durch die Wand der hinteren Lippe P_{L} und durch die druckseitige (22) oder saugseitige (23) Haut gebildet wird, wobei die Wand des Rinnenbodens P_{F} und die Wand der hinteren Lippe P_{L} einen Winkel β des Rinnenbodens bilden, während die Wand der hinteren Lippe P_{L} und die druckseitige (22) oder saugseitige (23) Haut einen Winkel α der hinteren Lippe bilden, wobei der Winkel β des Rinnenbodens und der Winkel α der hinteren Lippe es erlauben zu verhindern, dass das Wasser aus der Abflussrinne (10) verdrängt wird.

3. Aerodynamisches Element (2) nach einem der Ansprüche 1 bis 2,
**dadurch gekennzeichnet, dass** die Abflussrinne (10) eine Länge zwischen 4 und 20 mm aufweist, wobei die Länge entlang der Sehne des aerodynamischen Elements (2) gemessen wird.

4. Aerodynamisches Element (2) nach einem der Ansprüche 1 bis 2,
**dadurch gekennzeichnet, dass** die Abflussrinne (10) eine Höhe zwischen 2 und 10 mm aufweist, wobei die Höhe entlang einer Dicke des aerodynamischen Elements (2) gemessen wird.

5. Aerodynamisches Element (2) nach einem der Ansprüche 1 bis 4,
**dadurch gekennzeichnet, dass** der erste Verbindungsradius R₁ zwischen 0 und 10 mm beträgt.

6. Aerodynamisches Element (2) nach einem der Ansprüche 1 bis 5,
**dadurch gekennzeichnet, dass** der zweite Verbindungsradius R₂ zwischen 1 und 10 mm beträgt.

7. Aerodynamisches Element (2) nach einem der Ansprüche 2 bis 6,
**dadurch gekennzeichnet, dass** der Winkel β des Rinnenbodens weniger als 90° beträgt.

8. Aerodynamisches Element (2) nach einem der Ansprüche 2 bis 7,
**dadurch gekennzeichnet, dass** der Winkel α der hinteren Lippe kleiner als 90° ist.

9. Aerodynamisches Element (2) nach einem der Ansprüche 1 bis 8,
**dadurch gekennzeichnet, dass** die Frostschutzvorrichtung (1) mindestens ein Heizelement (14) auf der Höhe einer jeden Abflussrinne (10) aufweist.

10. Aerodynamisches Element (2) nach einem der Ansprüche 1 bis 9,
**dadurch gekennzeichnet, dass** das erste Ende (24) an einem Luftfahrzeug (50) befestigt ist, während das zweite Ende (25) ein freies Ende ist, wobei die Abflussrinne (10) am zweiten Ende (25) austritt.

11. Aerodynamisches Element (2) nach einem der Ansprüche 1 bis 10,
**dadurch gekennzeichnet, dass** die Frostschutzvorrichtung (1) mindestens eine innere Auffangleitung (15) aufweist, die sich längs über die Spannweite des aerodynamischen Elements (2) erstreckt, sowie Ansaugkanäle (16), wobei jede innere Auffangleitung (15) im Inneren des aerodynamischen Elements (2) angeordnet ist, und die Ansaugkanäle (16) jede Abflussrinne (10) mit einer inneren Auffangleitung (15) verbinden, wobei ein Unterdruck in den Ansaugkanälen (16) erzeugt wird zum Ansaugen des Wassers, um es zu dem Rinnenboden (12) zu führen.

12. Aerodynamisches Element (2) nach Anspruch 11,
**dadurch gekennzeichnet, dass** jede innere Auffangleitung (15) mit einem Pumpenmittel (17) verbunden ist, um den Unterdruck in den Ansaugkanälen (16) zu erzeugen.

13. Aerodynamisches Element (2) nach einem der Ansprüche 11 bis 12,
**dadurch gekennzeichnet, dass** das erste Ende (24) an einem Luftfahrzeug (50) befestigt ist, während das zweite Ende (25) ein freies Ende ist, wobei Druckluft mit hoher Geschwindigkeit in jeder der inneren Auffangleitungen (15) fließt, um den Unterdruck in den Ansaugkanälen (16) zu erzeugen, wobei jede innere Auffangleitung (15) sich zum zweiten Ende (25) hin öffnet und die Luft zum zweiten Ende (25) strömt.

14. Aerodynamisches Element (2) nach einem der Ansprüche 1 bis 13,
**dadurch gekennzeichnet, dass** das Enteisungssystem (3) ein elektrothermisches Enteisungssystem ist.

15. Aerodynamisches Element (2) nach einem der Ansprüche 1 bis 14,
**dadurch gekennzeichnet, dass** das aerodynamische Element (2) ein Blatt (53, 54) eines Rotors (51, 52) eines Drehflügelflugzeugs (50) ist.

16. Aerodynamisches Element (2) nach Anspruch 15,
**dadurch gekennzeichnet, dass** die Abflussrinne (10) in einem Abstand von dem ersten Ende (24) beginnt, der 35% der Gesamtspannweite des Rotorblatts (53, 54) entspricht, und sich über die Spannweite des Rotorblatts (53, 54) bis zu dem zweiten Ende (25) erstreckt.

## Claims

1. Aerodynamic element (2) provided with an anti-refreeze device (1), said aerodynamic element (2) comprising a lower surface skin (22) and a upper surface skin (23) extending longitudinally along the span of said aerodynamic element (2) from a first end (24) of said aerodynamic element (2) to a second end (25) of said aerodynamic element (2), and a leading edge (21) extending longitudinally along said span and connecting in an upstream zone of said aerodynamic element (2) along a chord of said aerodynamic element (2) said lower surface skin (22) and said upper surface skin (23), said aerodynamic element (2) being equipped with a de-icing system (3) positioned at said leading edge (21), said anti-refreeze device (1) comprising a discharge groove (10) adapted to extend longitudinally along said span on each lower surface skin (22) and upper surface skin (23), each discharge groove (10) being adapted to be positioned just downstream of said de-icing system (3) transversely along said chord so as to retrieve and discharge the water running on said aerodynamic element (2) from the upstream side of said aerodynamic element (2) towards the downstream side of said aerodynamic element (2), **characterised in that** each discharge groove (10) comprises an upstream lip (11), a groove bottom (12) and a downstream lip (13) and on the one hand a first connecting radius *R₁* between said upstream lip (11) and each lower surface skin (22) and upper surface skin (23) and on the other hand a second connecting radius *R₂* between said upstream lip (11) and said groove bottom (12), said first connecting radius *R₁* and said second connecting radius *R₂* enabling said water to be guided towards said groove bottom (12).

2. Aerodynamic element (2) according to claim 1,
**characterised in that** said groove bottom (12) is formed by a groove bottom wall *P_{F}* connected to said upstream lip (11) by said first connecting radius *R₁* and by a downstream lip wall *P_{L},* whereas said downstream lip (13) is formed by said downstream lip wall *P_{L}* and by said lower surface skin (22) or upper surface skin (23), said groove bottom wall *P_{F}* and said downstream lip *P_{L}* forming a groove bottom angle *β*, whereas said downstream lip *P_{L}* and said lower surface skin (22) or upper surface skin (23) form a downstream angle α, said groove bottom angle β and said downstream lip angle *α* making it possible to prevent said water from being forced back outside of said discharge groove (10).

3. Aerodynamic element (2) according to any one of claims 1 to 2,
**characterised in that** said discharge groove (10) has a length of between 4 and 20 mm, said length being taken along said chord of said aerodynamic element (2).

4. Aerodynamic element (2) according to any one of claims 1 to 2,
**characterised in that** said discharge groove (10) has a height of between 2 and 10 mm, said height being taken along a thickness of said aerodynamic element (2).

5. Aerodynamic element (2) according to any one of claims 1 to 4,
**characterised in that** said first connecting radius *R₁* is between 0 and 10 millimetres.

6. Aerodynamic element (2) according to any one of claims 1 to 5,
**characterised in that** said second connecting radius *R₂* is between 1 and 10 millimetres.

7. Aerodynamic element (2) according to any one of claims 2 to 6,
**characterised in that** said groove bottom angle *β* is less than 90°.

8. Aerodynamic element (2) according to any one of claims 2 to 7,
**characterised in that** said downstream lip angle *α* is less than 90°.

9. Aerodynamic element (2) according to any one of claims 1 to 8,
**characterised in that** said anti-refreeze device (1) comprises at least one heating element (14) at each discharge groove (10).

10. Aerodynamic element (2) according to any one of claims 1 to 9,
**characterised in that**, said first end (24) being fixed to an aircraft (50), whereas said second end (25) is free, said discharge groove (10) opens out at said second end (25).

11. Aerodynamic element (2) according to any one of claims 1 to 10,
**characterised in that** said anti-refreeze device (1) comprises at least one inner recovery conduit (15) extending longitudinally along the span of said aerodynamic element (2) and suction channels (16), each inner recovery conduit (15) being situated inside said aerodynamic element (2) and said suction channels (16) connecting each discharge groove (10) to an inner recovery conduit (15), a negative pressure being created in said suction channels (16) to suck said water in order to direct it towards said groove bottom (12).

12. Aerodynamic element (2) according to claim 11,
**characterised in that** each inner recovery conduit (15) is connected to a pumping means (17) in order to generate said negative pressure in said suction channels (16).

13. Aerodynamic element (2) according to any one of claims 11 to 12,
**characterised in that**, said first end (24) being fixed to an aircraft (50), whereas said second end (25) is free, a pressurised air flows at high speed in each inner recovery conduit (15) in order to generate said negative pressure in said suction channels (16), each inner recovery conduit (15) opening out at said second end (25) and said air flowing towards said second end (25).

14. Aerodynamic element (2) according to any one of claims 1 to 13,
**characterised in that** said de-icing system (3) is an electrothermal de-icing system.

15. Aerodynamic element (2) according to any one of claims 1 to 14,
**characterised in that** said aerodynamic element (2) is a blade (53,54) of a rotor (51,52) of a rotary wing aircraft (50).

16. Aerodynamic element (2) according to claim 15,
**characterised in that** said discharge groove (10) starts at a distance from said first end (24) corresponding to 35% of the total span of said blade (53,54) and extends along said span of said blade (53,54) as far as said second end (25).
